# EUROPÄISCHE PATENTSCHRIFT

(11) **EP 1 136 296 B1**
(45) Veröffentlichungstag und Bekanntmachung des Hinweises auf die Patenterteilung: **14.07.2010**
(21) Anmeldenummer: 01105761.9
(22) Anmeldetag: 08.03.2001
(51) Int. Cl.: B60J 7/22, B60J 7/16

(54) **Fahrzeugdach mit Lüftereinrichtung**
Vehicle roof with ventig device
Toit de véhicule avec dispositif de ventilation

(30) Priorität: 21.03.2000 DE 10013720
(43) Veröffentlichungstag der Anmeldung: 26.09.2001
(73) Patentinhaber: Webasto AG, 82131 Stockdorf (DE)
(72) Erfinder: Pfalzgraf, Manfred, 82211 Herrsching (DE); Schätzler, Walter, 82319 Starnberg (DE)
(74) Vertreter: Wiese, Gerhard

(56) Entgegenhaltungen:
- EP-A- 0 903 253
- US-A- 5 031 959

## Beschreibung

Die Erfindung betrifft ein Fahrzeugdach mit einem transparenten Dachabschnitt und zumindest einer an den Dachabschnitt angrenzenden Lüftereinrichtung zum Freigeben einer Lüfteröffnung.

Aus der EP 0 362 028 B1 ist ein Fahrzeugdach mit einem Dachausschnitt bekannt geworden, in den ein Rahmen eingesetzt ist, an dem eine vordere Lüfterklappe und eine hintere Lüfterklappe schwenkbar gelagert sind. Zwischen den beiden Lüfterklappe ist ein beispielsweise aus Glas bestehender Deckel an dem Rahmen verschwenk- und verschiebbar gelagert. Zusätzlich kann noch ein hinterer fester oder herausnehmbarer Deckel in dem Rahmen zwischen dem vorderen Deckel und der hinteren Lüfterklappe angebracht sein. Die vordere und die hintere Lüfterklappe sind durch eine Betätigungseinrichtung mit einem Elektromotor und mit zwei Seilzügen miteinander gekoppelt. Die beiden Seilzüge treiben jeweils einen von zwei verschiebbaren Betätigungswagen an, die beidseits an jeder Lüfterklappe vorgesehen sind und über Kulissenführungen die Ausstellbewegung der durch Federn in Ausstellrichtung vorgespannten Lüfterklappen steuern. Bei Verschiebung der Seilzüge aus der Schließstellung in die eine Richtung wird in eiern Bewegungsabfolge zuerst die hintere Lüfterklappe geöffnet, dann wird die vordere Lüfterklappe bei gleichzeitigem Schließen der hinteren Lüfterklappe geöffnet und schließlich wird wieder die vordere Lüfterklappe gemeinsam mit der noch offenen hinteren Lüfterklappe geöffnet. Bei einer Verschiebung der Seilzüge aus der Schließstellung in die entgegengesetzte Richtung kommen die Betätigungswagen außer Kontakt mit den Kulissenführungen der Lüfterklappen, so daß sich diese durch Federkraft aufstellen. Anschließend kommen die Betätigungswagen der vorderen Lüfterklappe mit den Kulissenführungen des vorderen ausstellbaren Deckels in Eingriff und stellen diesen aus.

Aufgabe der Erfindung ist es, ein eingangs genanntes Fahrzeugdach zu schaffen, das einen komfortablen, hellen Fahrzeuginnenraum bei weitgehend reduziertem Zugluft- und Geräuschverhalten bereitstellen kann.

Diese Aufgabe wird bei dem gattungsgemäßen Fahrzeugdach erfindungsgemäß dadurch gelöst, daß die Lüftereinrichtung in einem vorderen und/oder einem hinteren an den transparenten Dachabschnitt angrenzenden Dachquerträger des Fahrzeugdachs enthalten ist. An dem Dachquerträger als tragendes Teil des Fahrzeugdaches ist aufgrund seiner Dimensionierung die Lüftereinrichtung mit einer Betätigungseinrichtung integrierbar. Der angrenzende transparente Dachabschnitt ist mit dem Dachquerträger z. B. mittels einer Verklebung unmittelbar verbunden, so daß der transparente Dachabschnitt, der insbesondere ein Glasdeckel ist, am Fahrzeugdach rahmenlos eingebaut werden kann. Der Glasdeckel kann nahezu das gesamte Fahrzeugdach einnehmen, wobei aufgrund der großen Glasfläche der Eindruck eines geöffneten Daches entstehen kann, wobei jedoch kein Luftzug und keine bei geöffnetem Schiebedachdeckel auftretenden Umströmungsgeräusche entstehen. Eine hohe Be- und Entlüftungsleistung ergibt sich schon bei Verwendung nur einer vorderen oder einer hinteren Lüftereinrichtung. Werden zwei Lüftereinrichtungen verwendet, so kann durch wahlweises Öffnen einer oder beider Lüftereinrichtungen ein den jeweiligen Bedürfnissen entsprechendes Lüftungsverhalten individuell für die Vordersitze wie auch für die Rücksitze eingestellt werden.

Vorteilhafte Ausgestaltungen der Erfindung sind in den Unteransprüchen angegeben.

Zweckmäßigerweise enthält die Lüftereinrichtung eine ausstellbare Lüfterklappe, die beispielsweise um eine im Bereich ihrer Vorderkante angeordnete Schwenkachse ausschwenkbar ist. Die sich anhebende Hinterkante der Lüfterklappe öffnet dann die Lüftungsöffnung.

Für die Luftführung ist es zweckmäßig, wenn in dem Dachquerträger Luftströmungsöffnungen enthalten sind, die durch die Lüfterklappe abdeckbar sind.

Für ein optisch ansprechendes Erscheinungsbild des Fahrzeuginnenraumes ist es vorteilhaft, wenn der Dachquerträger eine untere Abdeckung aufweist, wobei diese dann verwendet wird, um einen Luftströmungsweg zum Be- oder Entlüften des Fahrzeuginnenraumes über die Lüftereinrichtung festzulegen. Dabei kann es zweckmäßig sein, wenn die Abdeckung Öffnungen oder eine Perforierung aufweist, so daß die Innenluft großflächig abströmen kann.

Bevorzugt ist in dem vorderen und/oder dem hinteren Dachquerträger ein ausfahrbarer Himmel zum zumindest teilweisen unterseitigen Abdecken des transparenten Dachabschnitts angeordnet.

Zur individuellen Einstellung ist es zweckmäßig, wenn die vordere und die hintere Lüftereinrichtung mittels jeweiliger Antriebseinrichtungen voneinander unabhängig betätigbar sind.

Nachfolgend wird ein Ausführungsbeispiel des Fahrzeugdaches unter Bezugnahme auf Zeichnungen näher erläutert. Es zeigt:
- Fig. 1: in einer Längsschnittansicht in schematischer Darstellung das Fahrzeugdach mit geschlossenen Lüfterklappen;
- Fig. 1a: in einer Längsschnittansicht in vergrößerter Darstellung einen Vorderabschnitt des Fahrzeugdaches gemäß Fig. 1;
- Fig. 1b: in einer Längsschnittansicht in vergrößerter Darstellung einen Hinterabschnitt des Fahrzeugdaches gemäß Fig. 1;
- Fig. 2: in einer Längsschnittansicht gemäß Fig. 1 das Fahrzeugdach mit geöffneten Lüfterklappen und einem geschlossenem Himmel.
- Fig. 2a: in einer Längsschnittansicht in vergrößerter Darstellung einen Vorderabschnitt des Fahrzeugdaches gemäß Fig. 2; und
- Fig. 2b: in einer Längsschnittansicht in vergrößerter Darstellung einen Hinterabschnitt des Fahrzeugdaches gemäß Fig. 2.

Ein Fahrzeugdach 1 eines PKW enthält einen vorderen Dachquerträger 2 und einen hinteren Dachquerträger 3, die sich als verstärkende oder tragende Teile des Fahrzeugdaches quer über dieses erstrecken. Zwischen den beiden Dachquerträgern 2, 3 erstreckt sich ein Glasdeckel 4 als fester transparenter Dachabschnitt des Fahrzeugdaches 1. Der Glasdeckel 4 ist an seinem Vorderrand an einem Trägerrand 5 des vorderen Dachquerträgers 2 z. B. durch Verkleben angebracht.

Der vordere Dachquerträger 2 enthält eine Lüftereinrichtung 6 mit einer Lüfterlamelle oder Lüfterklappe 7, die am Dachquerträger 2 um eine Schwenkachse 8 im Bereich ihres Vorderrandes schwenkbar gelagert ist. Mittels einer individuell betätigbaren, am vorderen Dachquerträger 2 angebrachten Antriebseinrichtung 9 ist die Lüfterklappe 7 in Lüfterstellungen teilweise oder vollständig ausstellbar, in denen zwischen dem angehobenen Hinterrand 10 und dem Vorderrand des Glasdeckels 4 eine Lüfteröffnung 11 gebildet ist. Der Dachquerträger 2 enthält über die Dachbreite mehrere (schematisch angedeutete) Luftströmungsöffnungen 12, durch die Luft aus dem Fahrzeuginnenraum 13 in den hohlen Dachquerträger 2 und weiter durch die Luftströmungsöffnungen 21 und über die Lüfteröffnung 11 zur Dachoberseite abströmen kann. Die Luftströmungsöffnungen 21 sind durch die Lüfterklappe 7 abdeckbar und dicht verschließbar.

Unter dem Dachquerträger 2 ist zum Fahrzeuginnenraum 13 hin eine Abdeckung 14 angebracht, die als ein Teil des Fahrzeughimmels gebildet sein kann. Die Abdeckung 14 läßt Strömungswege 15 (schematisch durch die beiden Pfeile 15 dargestellt) zum Be- und Entlüften des Fahrzeuginnenraumes 13 frei. Die Strömungswege 15 sind z. B. zwischen der Abdeckung 14 und dem Dachquerträger 2 gebildet. Ein Strömungsweg kann auch durch Öffnungen oder eine Perforierung in der Abdeckung 14 gebildet sein.

Der Glasdeckel 4 ist an seinem Hinterrand 16 an einem Trägerrand 17 des hinteren Dachquerträgers 3 z. B. durch Verkleben angebracht. Der hintere Dachquerträger 3 enthält ebenfalls eine Lüftereinrichtung 6' mit einer Lüfterlamelle oder Lüfterklappe 7', die am Dachquerträger 3 um eine Schwenkachse 8' im Bereich ihres Vorderrandes schwenkbar gelagert ist. Mittels einer individuell betätigbaren, am hinteren Dachquerträger 3 angebrachten Antriebseinrichtung (nicht dargestellt) ist die Lüfterklappe 7' in Lüfterstellungen teilweise oder vollständig ausstellbar, in denen zwischen dem angehobenen Hinterrand 10' und dem Dachquerträger 3 eine Lüfteröffnung 11' gebildet ist. Der Dachquerträger 3 enthält über die Dachbreite ebenfalls mehrere (schematisch angedeutete) Luftströmungsöffnungen 12', durch welche Luft aus dem Fahrzeuginnenraum 13 in den hohlen Dachquerträger 3 und weiter durch die Luftströmungsöffnungen 21' und über die Lüfteröffnung 11' an die Dachoberseite abströmen kann. Die Luftströmungsöffnungen 21' sind durch die Lüfterklappe 7' abdeckbar und dicht verschließbar.

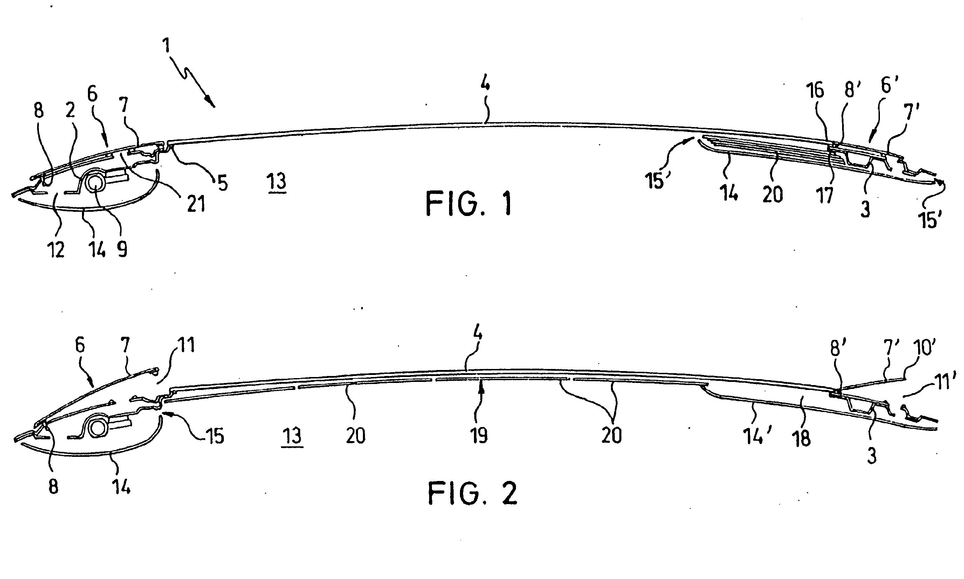

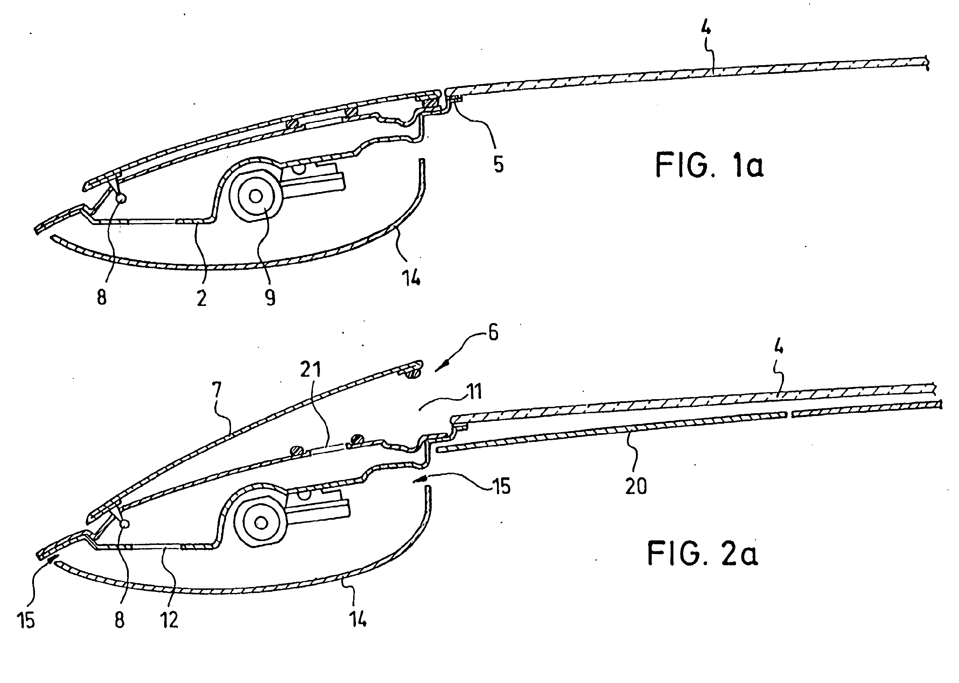

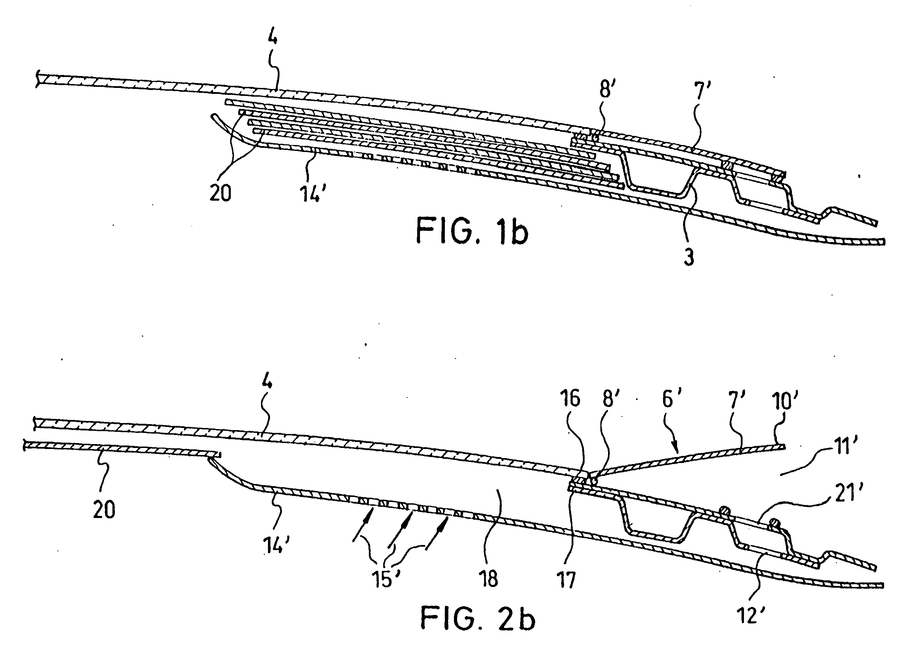

Eine Abdeckung 14' ist ebenfalls unter dem hinteren Dachquerträger 3 angebracht, die Strömungswege 15' vorgibt und die Öffnungen oder eine Perforierung aufweisen kann. In einem Aufnahmeraum 18 zwischen dem Glasdeckel 4 und der Abdeckung 14' ist ein ausfahrbarer Himmel 19 angeordnet, der aus seiner Ablagestellung (Fig. 1) bis zum vorderen Querträger 2 ausgefahren werden kann und somit den Glasdeckel 4 unterseitig vollständig abdecken kann. Der Himmel 19 kann als Rollo oder aus einzelnen Lamellen 20 gebildet sein, die in der Ablagestellung übereinander geschichtet sind und über seitliche Führungen nach vorne zum vorderen Dachquerträger 2 ausfahrbar sind.

Die Abdeckungen 14 und 14' verdecken die beiden Dachquerträger 2 und 3 sowie den abgelegten Himmel 19 vom Fahrzeuginnenraum 13 her und können durch die Gestaltung der Strömungswege 15 und 15' eine zugluftfreie Be- und Entlüftung gewährleisten.

### Bezugszeichenliste

- 1: Fahrzeugdach
- 2: Dachquerträger
- 3: Dachquerträger
- 4: Dachabschnitt. Glasdeckel
- 5: Trägerrand
- 6: Lüftereinrichtung
- 7: Lüfterklappe
- 8: Schwenkachse
- 9: Antriebseinrichtung
- 10: Hinterrand
- 11: Lüfteröffnung
- 12: Luftströmungsöffnung
- 13: Fahrzeuginnenraum
- 14: Abdeckung
- 15: Strömungsweg
- 16: Hinterrand
- 17: Trägerrand
- 18: Aufnahmeraum
- 19: Himmel
- 20: Lamellen
- 21: Luftströmungsöffnung

## Patentansprüche

1. Fahrzeugdach (1) mit einem transparenten Dachabschnitt (4) und zumindest einer an den Dachabschnitt (4) angrenzenden Lüftereinrichtung (6) zum Freigeben einer Lüfteröffnung (11),
**dadurch gekennzeichnet,**
**daß** ein vorderer und/oder ein hinterer an den transparenten Dachabschnitt (4) angrenzender Dachquerträger (2, 3) des Fahrzeugdachs (1) die zumindest eine Lüftereinrichtung (6, 6') enthält.

2. Fahrzeugdach nach Anspruch 1,
**dadurch gekennzeichnet, daß** der transparente Dachabschnitt (4) ein an den Dachquerträgern (2, 3) angebrachter Deckel und insbesondere ein Glasdeckel ist.

3. Fahrzeugdach nach Anspruch 1 oder 2,
**dadurch gekennzeichnet, daß** die Lüftereinrichtung (6, 6') eine ausstellbare Lüfterklappe (7, 7') aufweist.

4. Fahrzeugdach nach Anspruch 3,
**dadurch gekennzeichnet, daß** die Lüfterklappe (7, 7') um eine im Bereich ihrer Vorderkante angeordnete Schwenkachse (8, 8') ausschwenkbar ist.

5. Fahrzeugdach nach Anspruch 3 oder 4,
**dadurch gekennzeichnet, daß** in dem Dachquerträger (2, 3) Luftströmungsöffnungen (12) enthalten sind, die durch die Lüfterklappe (7) abdeckbar sind.

6. Fahrzeugdach nach einem der Ansprüche 1 bis 5,
**dadurch gekennzeichnet, daß** der Dachquerträger (2, 3) eine untere Abdeckung (14, 14') aufweist, die einen Luftströmungsweg (15) zum Be- oder Entlüften des Fahrzeuginnenraumes (13) über die Lüftereinrichtung (6, 6') festlegt.

7. Fahrzeugdach nach Anspruch 6,
**dadurch gekennzeichnet, daß** die Abdeckung (14, 14') Öffnungen oder eine Perforierung aufweist.

8. Fahrzeugdach nach einem der Ansprüche 1 bis 7,
**dadurch gekennzeichnet, daß** in dem vorderen und/oder dem hinteren Dachquerträger (2, 3) ein ausfahrbarer Himmel (19) zum zumindest teilweisen unterseitigen Abdecken des transparenten Dachabschnitts (4) angeordnet ist.

9. Fahrzeugdach nach einem der Ansprüche 1 bis 8,
**dadurch gekennzeichnet, daß** die vordere und die hintere Lüftereinrichtung (6, 6') mittels jeweiliger Antriebseinrichtungen voneinander unabhängig betätigbar sind.

## Claims

1. Vehicle roof (1) with a transparent roof portion (4) and at least one venting device (6) which is adjacent to the roof portion (4) and is intended for opening up a venting opening (11), **characterized in that** a front and/or a rear cross member (2, 3) of the vehicle roof (1), the cross member(s) being adjacent to the transparent roof portion (4), contain(s) the at least one venting device (6, 6').

2. Vehicle roof according to Claim 1, **characterized in that** the transparent roof portion (4) is a cover which is attached to the roof cross members (2, 3) and in particular is a glass cover.

3. Vehicle roof according to Claim 1 or 2, **characterized in that** the venting device (6, 6') has a deployable venting flap (7, 7').

4. Vehicle roof according to Claim 3, **characterized in that** the venting flap (7, 7') can be pivoted about a pivot axis (8, 8') arranged in the region of the front edge thereof.

5. Vehicle roof according to Claim 3 or 4, **characterized in that** air flow openings (12) which can be covered by the venting flap (7) are contained in the roof cross member (2, 3).

6. Vehicle roof according to one of Claims 1 to 5, **characterized in that** the roof cross member (2, 3) has a lower covering (14, 14') which defines an air flow path (15) for ventilating or venting the vehicle interior (13) via the venting device (6, 6').

7. Vehicle roof according to Claim 6, **characterized in that** the covering (14, 14') has openings or a perforation.

8. Vehicle roof according to one of Claims 1 to 7, **characterized in that** an extendable roof lining (19) for at least partially covering the lower side of the transparent roof portion (4) is arranged in the front and/or the rear roof cross member (2, 3).

9. Vehicle roof according to one of Claims 1 to 8, **characterized in that** the front and the rear venting device (6, 6') can be actuated independently of each other by means of respective driving devices.

## Revendications

1. Toit de véhicule (1) comprenant une portion de toit transparente (4) et au moins un dispositif de ventilation (6) adjacent à la portion de toit (4) pour libérer une ouverture de ventilation (11),
**caractérisé en ce que**
qu'un support transversal de toit avant et/ou arrière (2, 3) du toit de véhicule (1), adjacent à la portion de toit transparente (4), contient l'au moins un dispositif de ventilation (6, 6').

2. Toit de véhicule selon la revendication 1,
**caractérisé en ce que** la portion de toit transparente (4) est un couvercle monté sur les supports transversaux de toit (2, 3) et en particulier un couvercle en verre.

3. Toit de véhicule selon la revendication 1 ou 2,
**caractérisé en ce que** le dispositif de ventilation (6, 6') présente un volet de ventilation (7, 7') pouvant être sorti.

4. Toit de véhicule selon la revendication 3,
**caractérisé en ce que** le volet de ventilation (7, 7') peut être sorti par pivotement autour d'un axe de pivotement (8, 8') disposé dans la région de son arête avant.

5. Toit de véhicule selon la revendication 3 ou 4,
**caractérisé en ce que** des ouvertures d'écoulement d'air (12) sont contenues dans le support transversal de toit (2, 3), et peuvent être recouvertes par le volet de ventilation (7).

6. Toit de véhicule selon l'une quelconque des revendications 1 à 5,
**caractérisé en ce que** le support transversal de toit (2, 3) présente un recouvrement inférieur (14, 14') qui fixe une course d'écoulement d'air (15) pour ventiler ou désaérer l'espace intérieur du véhicule (13) par le biais du dispositif de ventilation (6, 6').

7. Toit de véhicule selon la revendication 6,
**caractérisé en ce que** le recouvrement (14, 14') présente des ouvertures ou une perforation.

8. Toit de véhicule selon l'une quelconque des revendications 1 à 7,
**caractérisé en ce que** dans les supports transversaux de toit avant et/ou arrière (2, 3) est disposé un plafond (19) pouvant être sorti pour recouvrir au moins en partie par le dessous la portion de toit transparente (4).

9. Toit de véhicule selon l'une quelconque des revendications 1 à 8,
**caractérisé en ce que** les dispositifs de ventilation avant et arrière (6, 6') peuvent être commandés indépendamment l'un de l'autre au moyen de dispositifs d'entraînement respectifs.
